# EUROPEAN PATENT APPLICATION

(11) **EP 4 400 984 A1**
(43) Date of publication of application: **17.07.2024**
(21) Application number: 21955280.9
(22) Date of filing: 06.09.2021
(51) Int. Cl.: G06F 16/9035, G06F 16/90

(54) **INFORMATION PROCESSING SYSTEM AND INFORMATION PROCESSING METHOD**

(71) Applicant: NISSAN MOTOR CO., LTD., Kanagawa 221-0023 (JP); Renault s.a.s, 92100 Boulogne Billancourt (FR)
(72) Inventor: KUSAYANAGI, Yoshinori, Atsugi-shi, Kanagawa 243-0123 (JP); YANAGI, Takura, Atsugi-shi, Kanagawa 243-0123 (JP); ONO, Saori, Atsugi-shi, Kanagawa 243-0123 (JP); SHIGETA, Miyuki, Atsugi-shi, Kanagawa 243-0123 (JP)
(74) Representative: Osha BWB
(86) International application number: PCT/IB2021/000618
(87) International publication number: WO 2023/031640

(57) **Abstract**

Provided are an information processing system (1) and an information processing method that are able to perform communication easy for users to understand while using a variety of dialogue expressions. The present invention includes detecting a user's proficiency level with respect to an agent device (5) and generating dialogue sentence data according to the user's proficiency level using response sentence information classified into positive sentences and negative sentences. This operation includes changing a proportion of the positive sentences used in the dialogue sentence data and a proportion of the negative sentences used in the dialogue sentence data, depending on whether the user's proficiency level is relatively low or relatively high.

## Description

### [Technical Field]

The present invention relates to an information processing system and an information processing method.

### [Background Art]

A conversation system is known, which is configured such that for certain words, positive will feeling words expressing a positive meaning content such as "favorite" and negative will feeling words expressing a negative meaning content such as "tiring" are associated and stored in a database (see Patent Document 1). When a word included in a received sentence is stored in the database, the conversation system creates a response sentence using a combination of a plurality of will feeling words associated with the word.

### [Prior Art Document]

### [Patent Document]

[Patent Document 1] JP2017-157011A

### [Summary of Invention]

### [Problems to be solved by Invention]

In the above conventional conversation system, positive will feeling words and negative will feeling words are irregularly mixed in the created response sentences. However, in a typical conversation, if the content uttered by a speaker includes sentences with a positive meaning and sentences with a negative meaning, it may be difficult for a listener to understand the content. Sentences that are unified to have a positive meaning convey the meaning more clearly, making it easier for the listener to understand the content.

Also, in communication devices that use agent functions, if sentences with positive meanings and sentences with negative meanings are mixed, it may be difficult to instantly understand what is uttered by an agent device, especially in a situation in which the user is unfamiliar with the agent device or cannot pay much attention to the agent device. On the other hand, if sentences with negative meanings are not used at all, dialogue expression will be limited and the agent's function will not be demonstrated. Therefore, in a device using a so-called agent function, it is desired to perform communication that is easy for users to understand, while using a variety of dialogue expressions.

A problem to be solved by the present invention is to provide an information processing system and an information processing method that are able to perform that is communication easy for users to understand while using a variety of dialogue expressions.

### [Means for solving problems]

The present invention includes detecting a user's proficiency level with respect to an agent device and generating dialogue sentence data according to the user's proficiency level using response sentence information classified into positive sentences and negative sentences. In this operation, the above problem is solved by changing a proportion of the positive sentences used in the dialogue sentence data and a proportion of the negative sentences used in the dialogue sentence data, depending on whether the user's proficiency level is relatively low or relatively high.

### [Effect of Invention]

According to the present invention, it is possible to perform communication that is easy for users to understand, while using a variety of dialogue expressions. In particular, when providing information using an agent function, the dialogue expressions are changed according to the user's situation, and the effect can therefore be expected that the user will be more likely to feel a good impression and sense of familiarity with the agent.

### [Brief Description of Drawings]

FIG. 1 is a block diagram illustrating a first embodiment of an information processing system according to the present invention.
FIG. 2 is a set of diagrams inside a vehicle interior illustrating an example of the installation location of an agent device of FIG. 1.
FIG. 3 is a diagram illustrating a configuration example of an occupant information database (driver) subjected to information processing by the information processing device of FIG. 1.
FIG. 4 is a set of diagrams for describing information processing of input data executed by the information processing device of FIG. 1.
FIG. 5 is a diagram illustrating examples of generation of response sentence information executed by the information processing device of FIG. 1.
FIG. 6 is a flowchart illustrating an example of an information processing procedure based on a driver's proficiency level, which is executed by the information processing device of FIG. 1.
FIG. 7A is a diagram illustrating an example of a scene in which dialogue sentence data is generated by performing the information processing in steps S107 to S109 of FIG. 6.
FIG. 7B is a diagram illustrating an example of a scene in which dialogue sentence data is generated by performing the information processing in step S106 of FIG. 6.
FIG.7C is a diagram illustrating an example of a scene in which dialogue sentence data is generated by performing the information processing in step S105 of FIG. 6.
FIG. 8 is a set of diagrams each illustrating another example of a scene in which dialogue sentence data corresponding to each of FIGS. 7A to 7C is generated.
FIG. 9 is a block diagram illustrating a second embodiment of an information processing system according to the present invention.
FIG. 10 is a flowchart illustrating an example of an information processing procedure based on a driver's recognition load, which is executed by the information processing device of FIG. 9.
FIG. 11A is a diagram illustrating an example of a scene in which dialogue sentence data is generated by performing the information processing in steps S207 to S209 of FIG. 10.
FIG. 11B is a diagram illustrating an example of a scene in which dialogue sentence data is generated by performing the information processing in step S206 of FIG. 10.
FIG. 11C is a diagram illustrating an example of a scene in which dialogue sentence data is generated by performing the information processing in step S205 of FIG. 10.
FIG. 12 is a block diagram illustrating a third embodiment of an information processing system according to the present invention.
FIG. 13 is a diagram illustrating a configuration example of an occupant information database (fellow passenger) subjected to information processing by the information processing device of FIG. 12.
FIG. 14 is a flowchart illustrating an example of an information processing procedure based on attribute information of a fellow passenger, which is executed by the information processing device of FIG. 12.
FIG. 15A is a diagram illustrating an example of a scene in which dialogue sentence data is generated by performing the information processing in steps S308 to S310 of FIG. 14.
FIG. 15B is a diagram illustrating an example of a scene in which dialogue sentence data is generated by performing the information processing in step S307 of FIG. 14.
FIG. 15C is a diagram illustrating an example of a scene in which dialogue sentence data is generated by performing the information processing in step S306 of FIG. 14.

### [Mode(s) for Carrying out the Invention]

### «First Embodiment»

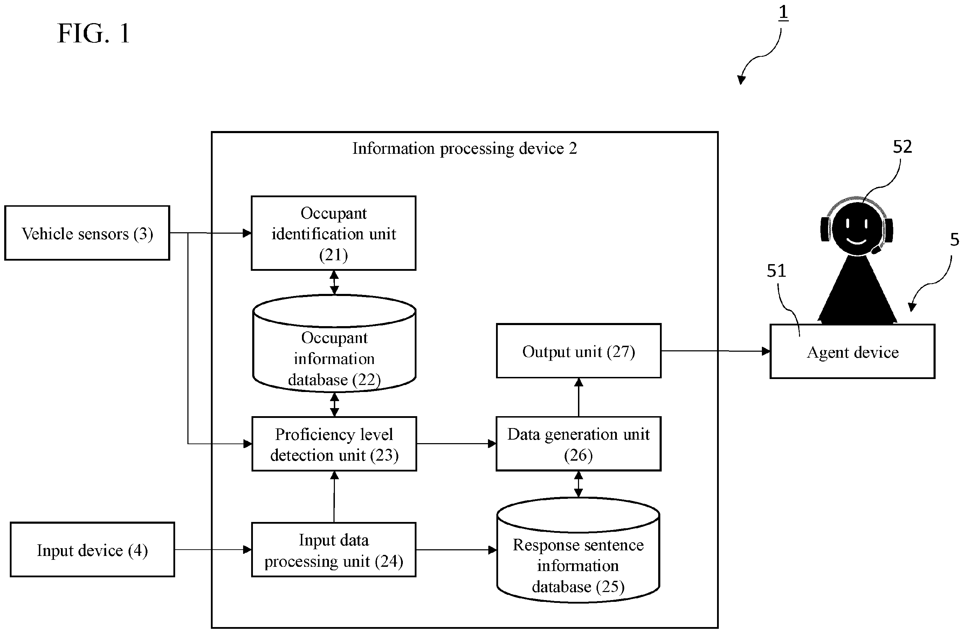

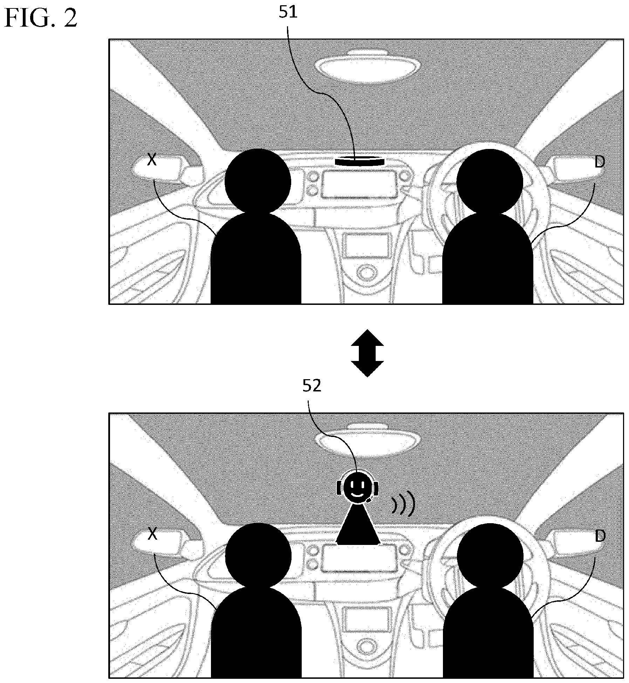

Hereinafter, embodiments of the present invention will be described with reference to the drawings. FIG. 1 is a block diagram illustrating a first embodiment of an information processing system 1 according to the present invention, and FIG. 2 is a set of diagrams inside a vehicle interior illustrating an example of the installation location and operation of an agent device 5 illustrated in FIG. 1. The information processing system 1 according to the present invention uses the agent device 5, which provides the user with information or has a dialogue with the user. The agent device 5 provides the user with the information via the agent function of an anthropomorphic agent 52 (also simply referred to as the agent 52, hereinafter), specifically a medium such as a voice, an image, a character robot motion, or a combination thereof. The information processing system 1 detects a user's proficiency level with respect to the agent device 5 and changes the proportion of positive sentences and the proportion of negative sentences according to the user's proficiency level. The positive sentences and the negative sentences are used in dialogue sentence data which the agent device 5 outputs.

In the present embodiment, the user refers to a person who uses the information processing system 1. The following description will be made for an example applied to a driver D of a vehicle, but the user may also be a fellow passenger X other than the driver D (the driver and fellow passenger will be simply referred to as occupants, hereinafter). The following description will also be made for an example in which the agent device 5 is installed in a vehicle, but the form and installation location of the agent device 5 are not limited to this. The agent device 5 may be any electronic device equipped with an agent function. For example, the agent device 5 may be a portable speaker-type electronic device or an electronic device with a display. Additionally or alternatively, functions related to voice output and video output of the agent device 5, which will be described below, may be installed in a mobile phone such as a smartphone. The anthropomorphized agent 52 is merely an example, and the agent 52 may be one displayed with an animal, a plant, a predetermined character, an avatar, or an icon, rather than imitating a human. The agent 52 may be provided as a physical individual, or the shape of the agent 52, such as a human, an animal, a plant, or a predetermined character, may be displayed as an image on a display.

As illustrated in FIGS. 1 and 2, the agent device 5 of the present embodiment is provided with a character robot 52 imitating a human so that it can move in and out of a base 51 by an actuator (not illustrated). When the agent device 5 receives a control command from an output unit 27 and communicates with an occupant using the agent function, it emerges from the base 51 as illustrated in the lower diagram of FIG. 2, and after completing the communication with the occupant, the character robot 52 is housed in the base 51 as illustrated in the upper diagram of FIG. 2.

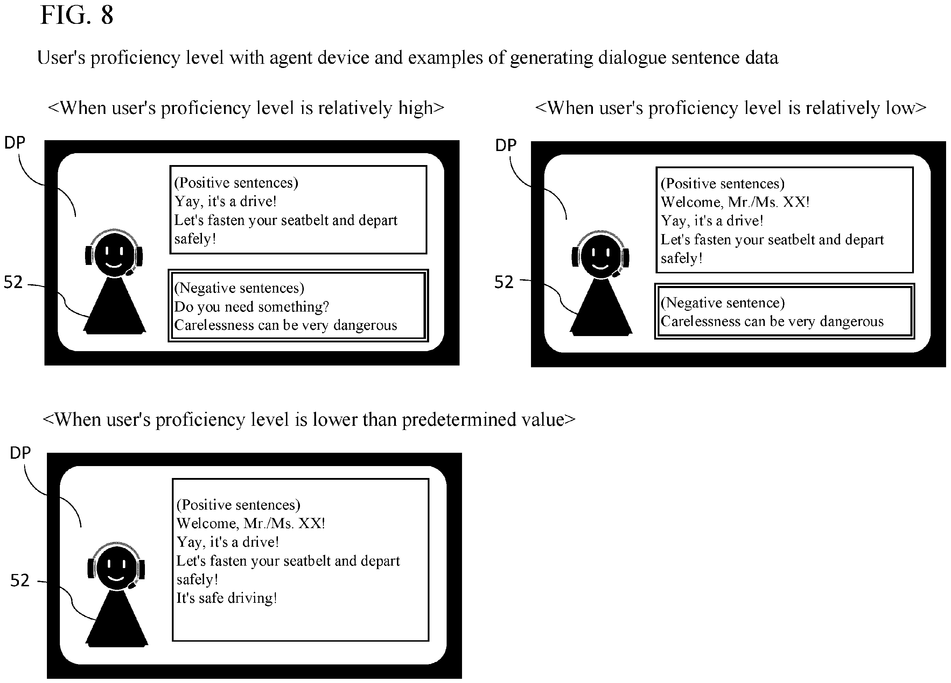

The agent device 5 includes a speaker or other voice output unit for outputting voices and sound effects and a display or other display unit for displaying images including text, and outputs communication information by providing the occupants with voices, sound effects, and text or other images along with the motion of the character robot 52. The present embodiment will be described with an example in which the agent is a three-dimensional object such as the character robot 52, but the agent is not limited to this, and may be a two-dimensional image displayed on a display as illustrated in FIG. 8.

Referring again to FIG. 1, the information processing system 1 of the present embodiment is composed of an information processing device 2, vehicle sensors 3, an input device 4, and the agent device 5 as an output device. The information processing device 2 includes a read only memory (ROM) that stores programs for executing various processes, a central processing unit (CPU) as an operating circuit that executes the programs stored in the ROM thereby to serve as the information processing device, and a random access memory (RAM) that serves as an accessible storage device. These devices are connected to one another, for example, via a controller area network (CAN) or other onboard LAN and can mutually exchange information. As illustrated in FIG. 1, when viewed from the functional configuration achieved by executing the information processing programs, the information processing device 2 includes an occupant identification unit 21, an occupant information database 22, a proficiency level detection unit 23, an input data processing unit 24, a response sentence information database 25, a data generation unit 26, and an output unit 27.

The occupant identification unit 21 specifies the driver D based on the input signals from the vehicle sensors 3 and stores it at least temporarily. In the scene illustrated in FIG. 2, the occupant identification unit 21 specifies the person seated in the driver's seat as the driver D based on image data captured by an onboard camera included in the vehicle sensors 3. The identification information of the specified driver D is output to the proficiency level detection unit 23. To specify the driver D, input signals from a seating sensor provided inside the seating portion of the seat or a seat belt sensor may be used. Additionally or alternatively, the driver D may be specified, for example, through storing the identification data of the driver D in the wireless key of the vehicle and automatically or semiautomatically reading the identification data of the driver D when the wireless key is used to unlock or start the vehicle.

In addition, the occupant identification unit 21 associates the detected values acquired from the vehicle sensors 3 with the identification information of the specified driver D to generate boarding information and accumulates it in the occupant information database 22. The boarding information refers to a boarding history that records the time when the driver D gets on the vehicle and the time when the driver D gets off the vehicle. The boarding information may include a usage history of onboard devices such as a navigation device and a driving assist device. The usage history may be acquired from the vehicle sensors 3.

Furthermore, the occupant identification unit 21 associates the detected values acquired from the vehicle sensors 3 with the identification information of the specified driver D to generate usage information of the agent device 5 by the driver D and accumulates the usage information in the occupant information database 22. The usage information refers to a usage history that records the time when the driver D starts using the agent device 5 and the time when the driver D finishes using it as well as an operation history of a specific operation such as changing the setting, cancellation of the operation (returning to the previous operation or canceling the operation), etc. and an input data history of voice information and text information input by driver D, etc. These usage information items of the agent device 5 are used to calculate the proficiency level of the driver D with respect to the agent device 5.

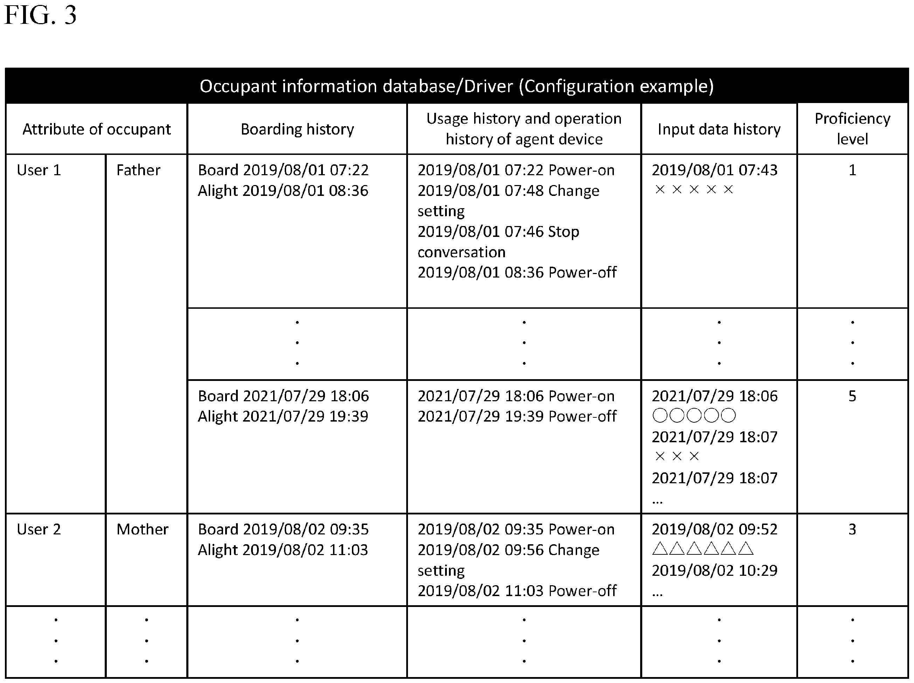

The occupant information database 22 stores the boarding information of the driver D and the usage information of the agent device 5 by the driver D, which are generated by the occupant identification unit 21. FIG. 3 is a diagram illustrating a configuration example (driver) of the occupant information database 22. As illustrated in FIG. 3, in the occupant attributes, for example, the father is recorded as a user 1, and the boarding history in which the father as the user 1 gets on and off the vehicle is stored as the boarding information. In addition, when the father as the user 1 gets on the vehicle, the usage history of the agent device 5 as well as the operation history of changing the setting and stopping the conversation of the agent device 5 and a history of input data such as voice information and text information input by the father as the user 1 are stored as the usage information of the agent device 5. Additionally or alternatively, the occupant information database 22 may include information on the proficiency level of each user, which is calculated based on the usage information of the agent device 5. Although the occupant information database 22 is configured to be included in the information processing device 2, it may also be configured to store or acquire various information items by communicating with an external server.

When acquiring the identification information of the driver D from the occupant identification unit 21, the proficiency level detection unit 23 refers to the occupant information database 22 to calculate the proficiency level using the usage information of the agent device 5 by the driver D. This is because the proficiency level according to the actual usage situation of the driver D can be calculated by using the usage information of the agent device 5. The proficiency level refers to an index indicating how experienced and skilled the driver D is to use of the agent device 5. The higher the proficiency level, the more experienced the driver D is to handling the agent device 5, and the lower the proficiency level, the less experienced the driver D is to handling the agent device 5. The proficiency level of the driver D calculated by the proficiency level detection unit 23 is accumulated in the occupant information database 22 and output to the data generation unit 26.

The method of calculating the proficiency level of the driver D is not particularly limited, but the proficiency level may be calculated by adding a score using the usage information of the agent device 5, for example, each time the cumulative time using the agent device 5 exceeds 50 hours or each time the cumulative number of times the agent device 5 is used exceeds 10. Additionally or alternatively, from the operation history of the agent device 5, the history of a specific operation and cancellation of the specific operation (returning to the previous operation or canceling the operation) may be referred to, and if the cancellation is not detected a predetermined number of times, a determination may be made that the user becomes experienced in the specific operation, and the score may be added. Additionally or alternatively, the score may be added to the information output by the agent device 5 according to the frequency with which the driver D inputs response information or the degree of detail of the content input by the driver D.

The proficiency level detection unit 23 may calculate the proficiency level using any one of the exemplified information items, or may calculate the proficiency level by combining a plurality of information items. Additionally or alternatively, in addition to the usage information of the agent device 5, familiarity with the vehicle may be taken into consideration, such as the amount of time the driver D has driven the vehicle and the usage history of onboard devices such as a navigation device and a driving assist device. When the driver D is a beginner in driving, the proficiency level with respect to the agent device 5 can be appropriately calculated by taking into account the driver's familiarity with the vehicle. Although the method of calculating the proficiency level is described as a scheme of addition using the score, the method is not limited to this.

The input data processing unit 24 performs voice recognition processing on the voice information of the driver D acquired from the input device 4 and classifies the input data into positive sentences or negative sentences based on the words included in the voice information. The input device 4 is, for example, a microphone provided inside the vehicle and capable of voice input. Although the installation position of the input device 4 is not particularly limited, it is preferably installed near an occupant's seat. Known techniques can be applied to the voice recognition processing. In the voice recognition processing, the voice information of the driver D is digitized to create text data (character string), and the text data is classified into positive sentences or negative sentences based on the words included in the text data. A positive sentence refers to a word or sentence that is used in a positive or active sense to the driver D, and a negative sentence refers to a word or sentence used in a negative or inactive sense to the driver D.

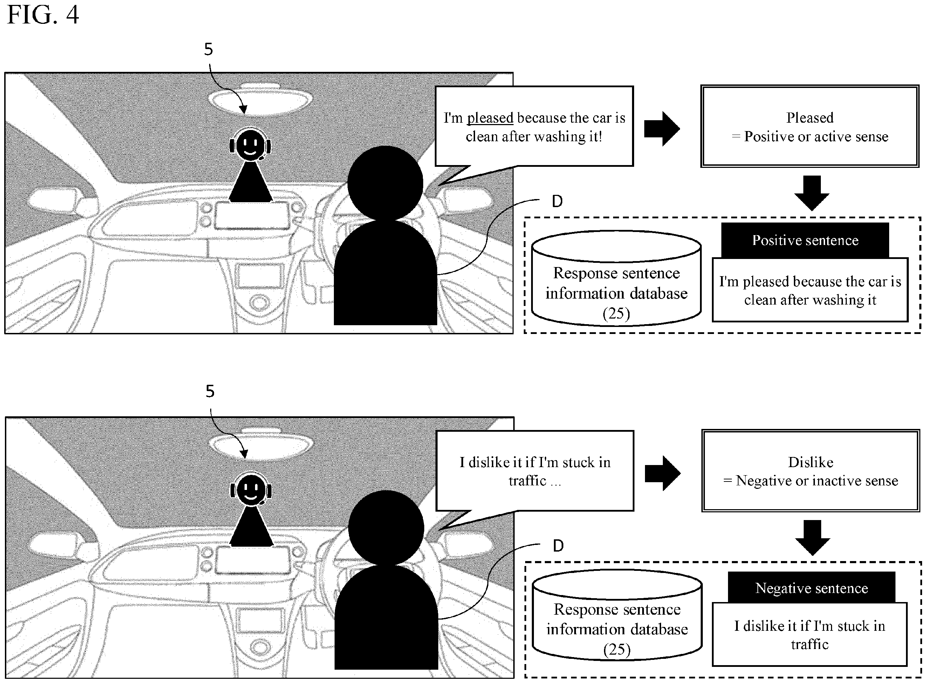

For example, as illustrated in the upper diagram of FIG. 4, when acquiring the voice information from the driver D saying "I'm pleased because the car is clean after washing it.," the input data processing unit 24 digitizes the voice information to generate text data and classifies the input data based on the word "pleased" included in the text data. Since the word "pleased" is used with a positive or active sense to the driver D, the input data processing unit 24 classifies the sentence "I'm pleased because the car is clean after washing it." as a positive sentence and stores it in the response sentence information database 25. Note that only the word "pleased" may be stored in the response sentence information database 25.

Likewise, as illustrated in the lower diagram of FIG. 4, when acquiring the voice information from the driver D saying "I dislike it if I'm stuck in traffic.," the input data processing unit 24 digitizes the voice information to generate text data and classifies the input data based on the word "dislike" included in the text data. Since the word "dislike" is used with a negative or inactive sense to the driver D, the input data processing unit 24 classifies the sentence "I dislike it if I'm stuck in traffic." as a negative sentence and stores it in the response sentence information database 25. Note that only the word "dislike" may be stored in the response sentence information database 25.

Thus, when the words included in the voice information of the driver D or the sentences containing such words are used with a positive or active sense to the driver D, the input data processing unit 24 classifies them into positive sentences, while when they are used with a negative or inactive sense to the driver D, the input data processing unit 24 classifies them into negative sentences.

Additionally or alternatively, the preferences of the driver D may be reflected in the classification of positive sentences and negative sentences. For example, when the voice information is acquired from the driver D saying "I'm pleased because the team α (the baseball team the driver D supports) wins against the team β (the baseball team the driver D does not support).," information regarding "the team α (the baseball team the driver D supports)" may be classified as a positive sentence used with a positive or active sense to the driver D, while information regarding "the team β (the baseball team the driver D does not support)" may be classified as a negative sentence used with a negative or inactive sense to the driver D.

The positive sentences and negative sentences based on the voice information of the driver D, classified by the input data processing unit 24, are stored in the response sentence information database 25 as response sentence information used to generate dialogue sentence data that is output from the agent device 5.

The response sentence information database 25 stores the response sentence information of positive sentences and negative sentences accumulated based on the voice information of the driver D. In addition to these response sentence information items, linguistic information is stored, such as typical example sentences of response sentences used by the data generation unit 26 to generate the dialogue sentence data, vocabulary such as words and phrases, and grammatical information. Although the response sentence information database 25 is configured to be included in the information processing device 2, it may also be configured to store or acquire various information items by communicating with an external server.

In addition to using the positive sentences and negative sentences accumulated based on the above-described voice information of the driver D, the dialogue sentence data can also be generated by using information acquired about a specific topic from external websites or other external sites via telecommunication networks such as the Internet and applying the acquired information to typical example sentences of response sentences or by using response sentence information generated by a predetermined algorithm.

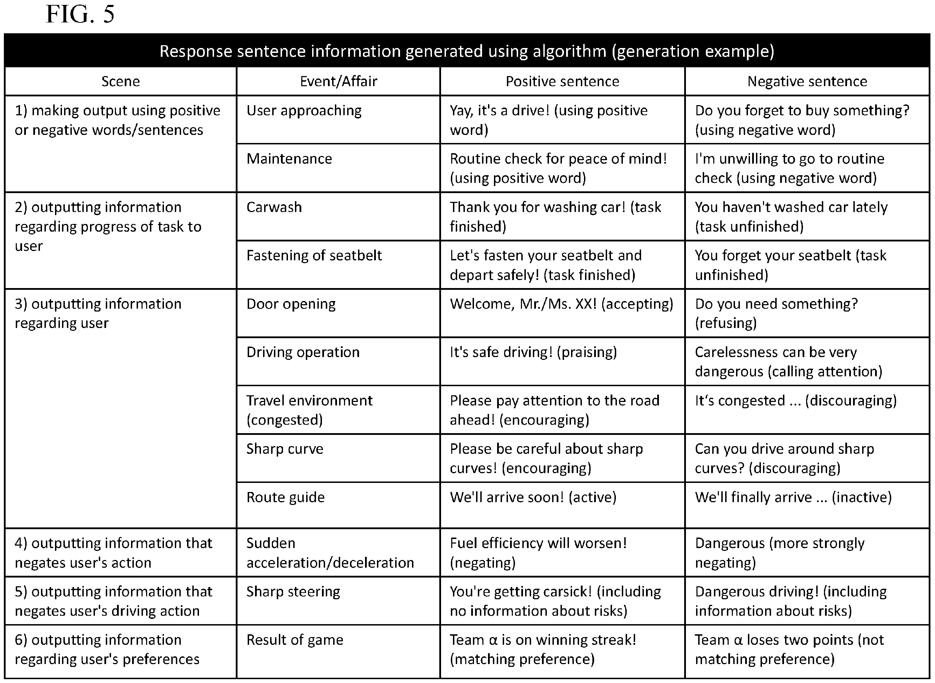

FIG. 5 is a diagram illustrating examples of the response sentence information generated using a predetermined algorithm. The algorithm for generating the response sentence information is not particularly limited, but may be preliminarily programmed with various conditions such as: 1) making an output using positive or negative words/sentences; 2) outputting information regarding the progress of a task to the user; 3) outputting information regarding the user; 4) outputting information that negates the user's action; 5) outputting information that negates the user's driving action; and 6) outputting information regarding the user's preferences.

For example, 1) when making an output using positive or negative words/sentences, the response sentence information is generated such that words or sentences having a predetermined positive meaning are used for the positive sentences while words or sentences having a predetermined negative meaning are used for the negative sentences. In the example illustrated in FIG. 5, when the driver D approaches the vehicle, the response sentence information "Yay, it's a drive." is generated as a positive sentence using "Yay," which has a positive meaning. On the other hand, in a negative sentence, the response sentence information "Do you forget to buy something?" is generated using "forget," which has a negative meaning.

Next, 2) when outputting information regarding the progress of a task to the user, the response sentence information is generated such that a positive sentence includes a content indicating that the task has been finished while a negative sentence includes a content indicating that the task has not been finished or that the task is in an abnormal state. In the example illustrated in FIG. 5, regarding the task of carwash for the driver D, the response sentence information "Thank you for washing the car." is generated as a positive sentence, indicating that the carwash has been finished. On the other hand, as a negative sentence, the response sentence information "You haven't washed the car lately" is generated, indicating that the carwash has not been finished.

Then, 3) when outputting information regarding the user, the response sentence information is generated such that a positive sentence includes a content that affirms information related to the user (accepting, praising, encouraging, active) while a negative sentence includes a content that negates information related to the user (refusing, calling for attention, discouraging, inactive). In the example illustrated in FIG. 5, when the driver D opens the door of the vehicle, the response sentence information "Welcome, Mr./Ms. XX (name of the driver D)." is generated as a positive sentence, affirming (accepting) that the driver D opens the door. On the other hand, as a negative sentence, the response sentence information "Do you need something?" is generated, negating (refusing) that the driver D opens the door.

4) When outputting information that negates the user's action, the response sentence information is generated such that a negative sentence includes a content that negates the user's action more strongly than a positive sentence. In the example illustrated in FIG. 5, regarding the operation of sudden acceleration or deceleration of the driver D, the response sentence information "Fuel efficiency will worsen." is generated as a positive sentence whereas as a negative sentence, the response sentence information "Dangerous." is generated, negating the operation of the driver D more strongly. Additionally or alternatively, 5) when outputting information that negates the user's driving action, the negative sentence may include information related to the danger to the occupants and the vehicle. For example, regarding the driving operation of sharp steering of the driver D, the response sentence information "You're getting carsick." is generated in a positive sentence while the response sentence information "Dangerous driving." is generated in a negative sentence.

6) When outputting information regarding the user's preferences, the response sentence information is generated such that a positive sentence includes a content that matches a predetermined user's preference while a negative sentence includes a content that does not match the predetermined user's preference. In the example illustrated in FIG. 5, when the driver D roots for a team α (baseball team), the response sentence information "Team α is on a winning streak." is generated as a positive sentence using a content that is favorable for the team α. On the other hand, as a negative sentence, the response sentence information "Team α loses two points." is generated using a content that is unfavorable for the team α.

Referring again to FIG. 1, the data generation unit 26 determines the proportion of positive sentences used in the dialogue sentence data and the proportion of negative sentences used in the dialogue sentence data based on the proficiency level of the driver D acquired from the proficiency level detection unit 23 and generates the dialogue sentence data that is output from the agent device 5. As described above, in the communication using the agent device 5, if sentences having a positive meaning and sentences having a negative meaning are mixed, it may be difficult for the driver D to instantly understand the content uttered by the agent 52. This tendency is particularly strong when the driver D is inexperienced in handling the agent device. Sentences that are unified to have a positive meaning convey the meaning more clearly, making it easier for the listener to understand the content, while on the other hand, dialogue expression will be limited if sentences having a negative meaning are not used at all.

In the information processing system 1 of the present embodiment, therefore, output data is generated by changing the proportion of positive sentences used in the dialogue sentence data and the proportion of negative sentences used in the dialogue sentence data based on the proficiency level of the driver D. This allows communication to be performed that is easy for the user to understand, while using a variety of dialogue expressions. In particular, when the driver D is inexperienced in handling the agent device 5, that is, when the proficiency level is low, the information processing system 1 of the present embodiment increases the proportion of the positive sentences used to generate the dialogue sentence data as compared to when the driver D is experienced in handling the agent device 5, that is, when the proficiency level is high.

The "dialogue sentence data" is data that is output from the agent device 5 using the response sentence information classified into positive sentences and negative sentences and refers to a collection of a plurality of response sentence information items that are output in a predetermined period of time or a predetermined number of times. The "proportion of positive sentences" refers to the number of outputs of the positive sentences to the total number of outputs of the response sentence information items in the "dialogue sentence data," and the "proportion of negative sentences" refers to the number of outputs of the negative sentences to the total number of outputs of the response sentence information items in the "dialogue sentence data." The predetermined period of time may be, for example, but is not particularly limited to, a certain period of time such as a period from the start to the end of a series of conversations between the driver D and the agent device 5, a period until the end of a series of conversations about a certain topic, a period from when the driver D gets on the vehicle to when the driver D gets off the vehicle, a period from when the driver D starts driving the vehicle to when the driver D stops driving the vehicle, or a period until the trip meter installed in the vehicle is reset. The predetermined number of times may be, but is not particularly limited to, a certain number of times that is obtained such that the number of times the response sentence information is output, the number of times the positive sentences are output, the number of times the negative sentences are output, or the like is accumulated and counted for each user, for example, using a counter (not illustrated), such as every time the number of outputs of the response sentence information is counted by five. These count records of the response sentence information may be stored in the occupant information database 22. The following description will be made for an example applied to a scene in which the "dialogue sentence data" is output during a period from when the driver D gets on the vehicle to when the driver D gets off the vehicle.

For example, assume that the response sentence data using a positive sentence "Welcome, Mr./Ms. XX (name of the driver D)." is output from the agent device 5 to the driver D who gets on the vehicle for the first time in a while and uses the agent device 5. In such a scene, it can be understood that the content is to accept the driver D, regardless of whether the proficiency level of the driver D is low or high. Also assume that the response sentence data using a negative sentence "Do you need something?" is output from the agent device 5. In such a scene, if the proficiency level of the driver D is low, the driver D may consider that the content is to refuse the driver D and may feel uncomfortable to the agent device 5. On the other hand, if the proficiency level of the driver D is high, the driver D is experienced in communicating with the agent device 5, so the negative sentence "Do you need something?" can be interpreted to supplement the intention as to why such a negative sentence is uttered. For example, if the driver D interprets that the negative sentence is uttered to render a play that the agent device 5 is in a bad mood because the driver D has not used the agent device 5 for a while, he/she may actually become attached to the agent.

However, even when the proficiency level of the driver D is high, if the dialogue sentence data using negative sentences is continuously output, there is a risk that the driver D will feel uncomfortable. The data generation unit 26 may therefore use a counter (not illustrated) or the like to store for each user the number of times the positive sentences and the negative sentences are used in the dialogue sentence data, and control may be performed so that negative sentences are not frequently output in succession. Additionally or alternatively, the control may be performed so that negative sentences are not output for a predetermined period of time because there is a possibility that the acceptability of the driver D to the agent device 5 decreases, such as when a suppression operation by the driver D is detected, such as the driver D interrupting with a loud voice the dialogue sentence data output by the agent device 5 or taking an action to suppress the output, or when the driver D turns off the power of the agent device 5.

Thus, the negative sentences give different impressions to the driver D depending on the proficiency level of the driver D. When the proficiency level of the driver D is low, therefore, the proportion of positive sentences used in the dialogue sentence data is increased and the proportion of negative sentences is suppressed, as compared to when the proficiency level of the driver D is high. This can provide communication that is easy to understand, especially for the driver D who is not experienced in handling the agent device 5. On the other hand, when the proficiency level of the driver D is high, the proportion of negative sentences used in the dialogue sentence data is increased as compared to when the proficiency level of the driver D is low. For the driver D who is experienced in handling the agent device 5, it is possible to expect the effects that a relationship of trust can be built by outputting a moderate amount of negative sentences thereby to give the impression that the agent 52 is speaking the truth, and that the user will be more likely to feel a good impression and sense of familiarity with the agent 52.

When the proficiency level of the driver D is lower than a predetermined value, that is, when the driver D has just started using the agent device 5, the data generation unit 26 may output only positive sentences as the response sentence data without using negative sentences. The predetermined value may be, for example, but is not particularly limited to, a value that is estimated to indicate that the driver D is inexperienced in handling the agent device 5, such as when the amount of time the driver D uses the agent device 5 is less than 50 hours as a total, when the frequency of use is less than once a week, or when a specific operation and cancellation of the operation are detected the same number of times. Through this operation, at the initial stage of using the agent device 5, communication is performed with a content that is easy for the driver D to understand, and smooth communication using the agent device 5 can therefore be established.

After determining whether to use the response sentence information of a positive sentence or a negative sentence according to the proficiency level of the driver D, the data generation unit 26 generates the text data of a dialogue sentence using the response sentence information based on the voice information of the driver D, the response sentence information generated by applying information acquired about a specific topic from external websites or other external sites to typical example sentences of response sentences, the response sentence information generated using a predetermined algorithm, etc. Then, when outputting the dialogue sentence data using the voice function of the agent device 5, the data generation unit 26 converts the text data of the dialogue sentence into voice data through a voice synthesis process and transmits the voice data to the output unit 27 as output data which the agent 52 utters. Known techniques can be applied to the voice synthesis process. When outputting the text data of the dialogue sentence as character information, the data generation unit 26 transmits the generated text data to the output unit 27 as output data which the agent 52 displays.

When receiving the output data from the data generation unit 26, the output unit 27 outputs control signals to the speaker or other voice output unit and the display or other display unit of the agent device 5 and uses the agent function of the agent 52 to output the dialogue sentence data.

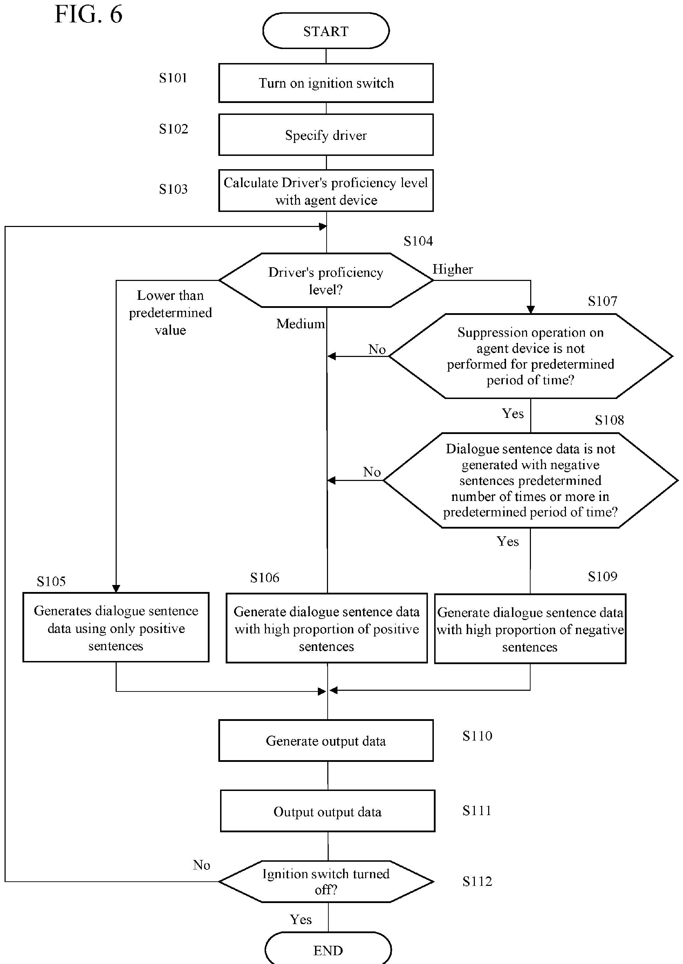

The information processing procedure of the information processing system 1 of the present embodiment will now be described with reference to FIGS. 6 to 8. FIG. 6 is a flowchart illustrating an information processing procedure based on the proficiency level of the driver D, which is executed by the information processing device 2 of FIG. 1.

First, in step S101 of FIG. 6, when the ignition switch of the vehicle is turned on, the following information processing is executed. In step S102, the occupant identification unit 21 specifies the driver D based on the information acquired from the onboard camera included in the vehicle sensors 3. Then, in step S103, the proficiency level detection unit 23 searches the occupant information database 22 based on the identification information of the driver D and calculates the proficiency level of the driver D using the usage information of the agent device 5.

In the subsequent step S104, when a determination is made that the proficiency level of the driver D calculated by the proficiency level detection unit 23 is lower than a predetermined value, the process proceeds to step S105. When the proficiency level of the driver D is medium, the process proceeds to step S106, while when the proficiency level of the driver is high, the process proceeds to step S107.

When a determination is made in step S104 that the proficiency level of the driver D is lower than the predetermined value, the driver D is at the initial stage of using the agent device 5, so this step is followed by step S105, in which the data generation unit 26 generates the dialogue sentence data using only positive sentences without using negative sentences.

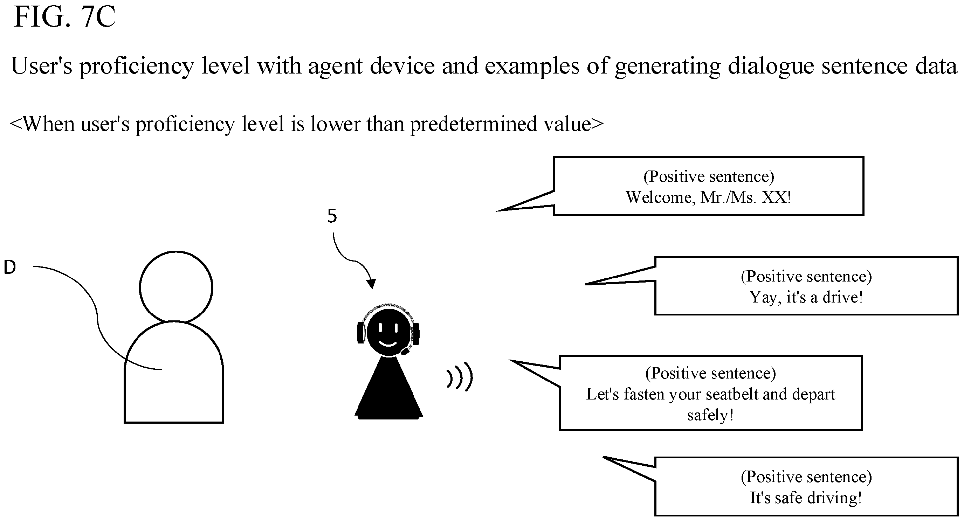

FIG. 7C is a diagram illustrating an example of a scene when step S 105 is reached. This figure illustrates a scene in which the dialogue sentence data is generated to be output from the agent device 5 to the driver D using the voice function. As illustrated in FIG. 7C, when the proficiency level of the driver D is lower than the predetermined value, the dialogue sentence data is generated using only the response sentence information of positive sentences such as "Welcome, Mr./Ms. XX (name of the driver D).," "Yay, it's a drive.," "Let's fasten your seatbelt and depart safely.," and "It's safe driving."

When a determination is made in step S104 that the proficiency level of the driver D is medium, a negative sentence is also used because the driver D is not at the initial stage of using the agent device 5. However, the driver D is not sufficiently experienced in handling the agent device 5, so in step S106, the data generation unit 26 generates the dialogue sentence data so that the proportion of positive sentences is high.

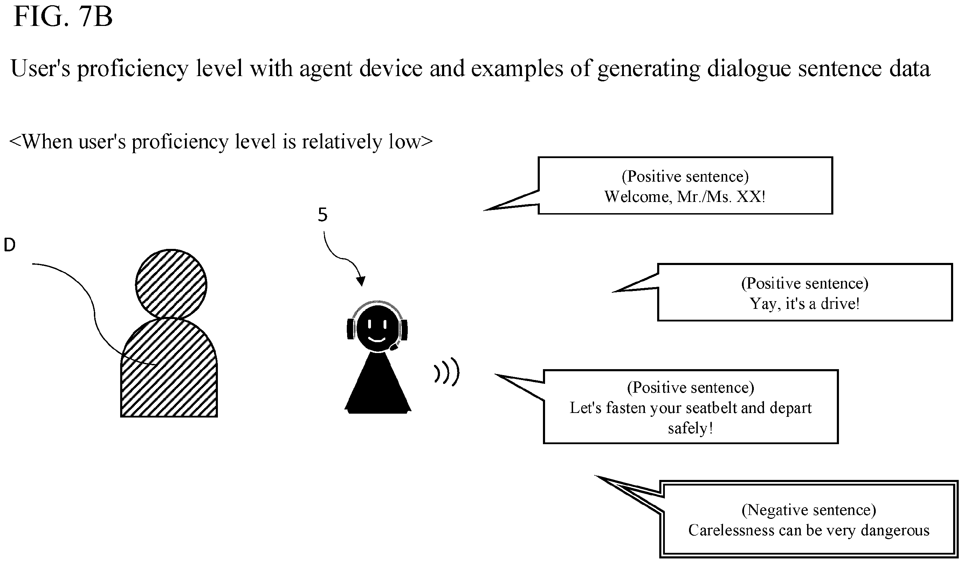

FIG. 7B is a diagram illustrating an example of a scene when step S106 is reached. As illustrated in FIG. 7B, when the proficiency level of the driver D is relatively low, the dialogue sentence data is generated so that the proportion of positive sentences is higher than when the proficiency level of the driver D is relatively high, while including the response sentence information of negative sentences such as "Carelessness can be very dangerous." in addition to the response sentence information of positive sentences such as "Welcome, Mr./Ms. XX (name of the driver D).," "Yay, it's a drive.," and "Let's fasten your seatbelt and depart safely." In FIG. 7B, the dialogue sentence data is generated from four items of response sentence information, and the negative sentence is output fourth, but the quantity of response sentence information used for the dialogue sentence data and the output order of negative sentences are not limited to the above. Additionally or alternatively, the data generation unit 26 may generate the dialogue sentence data by appropriately referring to a count record of the response sentence information stored for the driver D.

When a determination is made in step S104 that the proficiency level of the driver D is high, the data generation unit 26 determines, in step S107, whether the suppression operation by the driver D is not performed on the output of the agent device 5 for a predetermined period of time. The predetermined period of time may be, but is not particularly limited to, a certain period of time such as the past one week. When the suppression operation is performed on the output of the agent device 5 within the predetermined period of time, there is a possibility that the acceptability of the driver D to the agent device 5 decreases, so the process proceeds to step S106, in which the dialogue sentence data is generated with a high proportion of the positive sentences. On the other hand, when in step S107 the suppression operation is not performed on the output of the agent device 5 for the predetermined period of time, the process proceeds to step S108.

In step S108, the data generation unit 26 determines whether the dialogue sentence data is not generated with negative sentences a predetermined number of times or more in a predetermined period of time. The predetermined period of time and the predetermined number of times are not particularly limited, but refer to a certain degree of frequency, such as three or more times in the past five outputs. When the dialogue sentence data is generated using negative sentences more than the predetermined number of times in the predetermined period of time, there is a possibility that the negative sentences will be output to the driver D frequently and continuously. In this case, in order to prevent the acceptability of the driver D to the agent device 5 from decreasing, the process proceeds to step S106, in which the dialogue sentence data is generated with a high proportion of the positive sentences. On the other hand, when in step S108 the dialogue sentence data is not generated using negative sentences the predetermined number of times or more in the predetermined period of time, the process proceeds to step S109, in which the dialogue sentence data is generated with a higher proportion of negative sentences than that in the case in which the proficiency level is relatively low.

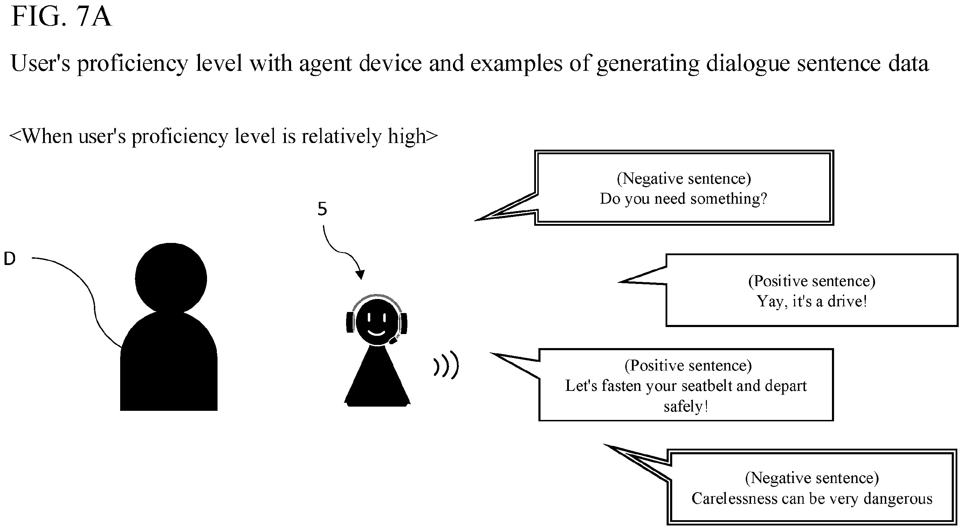

FIG. 7A is a diagram illustrating an example of a scene when step S109 is reached. As illustrated in FIG. 7A, when the proficiency level of the driver D is relatively high, the dialogue sentence data is generated so that the proportion of negative sentences is higher than when the proficiency level is relatively low, while using both the response sentence information of positive sentences such as "Yay, it's a drive." and "Let's fasten your seatbelt and depart safely." and the response sentence information of negative sentences such as "Do you need something?" and "Carelessness can be very dangerous." However, the data generation unit 26 performs control so that the proportion of negative sentences does not become too high in the above-described processing procedures of step S107 and step S108. Note that the information processing in steps S107 and S108 is not an essential component of the present invention, and may be omitted as appropriate. In FIG. 7A, the dialogue sentence data is generated from four items of response sentence information, and the negative sentences are output first and fourth, but the quantity of response sentence information used for the dialogue sentence data and the output order of negative sentences are not limited to the above. Additionally or alternatively, the data generation unit 26 may generate the dialogue sentence data by appropriately referring to a count record of the response sentence information stored for the driver D.

In the subsequent step S110, the output data to be output from the agent device 5 is generated using the generated dialogue sentence data. As illustrated in FIGS. 7A to 7C, when outputting the dialogue sentence data using the voice function of the agent device 5, the text data of the dialogue sentences is converted into voice data by a voice synthesis process to generate the output data. Additionally or alternatively, as illustrated in FIG. 8, when outputting the dialogue sentence data using the display function of the agent device 5, the text data of the dialogue sentences is used as the output data. Although FIG. 8 illustrates examples in which images of the agent 52 and text data of the dialogue sentences are displayed on a display DP, the display format is not limited to this. Furthermore, examples in which different display forms are used to make it easier to distinguish between positive sentences and negative sentences are illustrated, but the display form is not limited to this.

In step S111, the output unit 27 outputs control signals to the speaker or other voice output unit and the display or other display unit of the agent device 5, and outputs the output data using the agent function of the agent 52. Another configuration may also be adopted, in which the reaction of the driver D to the output data is acquired using the vehicle sensors 3, the input device 4, etc. and the proficiency score of the driver D is added when an acceptable reaction (positive reaction) to the output data output from the agent device 5 is detected.

In step S112, when the ignition switch is turned off, the above information processing is concluded. On the other hand, the information processing from step S104 to step S111 is repeatedly executed until the ignition switch is turned off.

As described above, according to the information processing system 1 and the information processing method of the present embodiment, the proficiency level of the driver D (user) with respect to the agent device 5 is detected, and the response sentence information classified into positive sentences and negative sentences is used to generate the dialogue sentence data according to the proficiency level of the driver D (user). In this operation, the proportion of the positive sentences used in the dialogue sentence data and the proportion of the negative sentences used in the dialogue sentence data are changed depending on whether the proficiency level of the driver D (user) is relatively low or relatively high, and it is therefore possible to perform communication that is easy for the driver D (user) to understand, while using a variety of dialogue expressions.

Moreover, according to the information processing system 1 and the information processing method of the present embodiment, the proficiency level of the driver D (user) is estimated from at least one of an amount of time the driver D (user) uses the agent device 5, a frequency of use and operating state of the agent device 5, and a frequency and content of input data from the driver D (user). This allows the proficiency level of the driver D (user) to be calculated according to the actual usage situation of the agent device 5.

Furthermore, according to the information processing system 1 and the information processing method of the present embodiment, when the proficiency level of the driver D (user) is relatively low, the data generation unit 26 increases the proportion of the positive sentences used in the dialogue sentence data as compared to when the proficiency level of the driver D (user) is relatively high. This can provide communication that is easy to understand, especially for the driver D (user) who is not experienced in handling the agent device 5.

In addition, according to the information processing system 1 and the information processing method of the present embodiment, when the proficiency level of the driver D (user) is lower than a predetermined value, the data generation unit 26 does not use the negative sentences in the dialogue sentence data. Through this operation, at the initial stage in which the driver D (user) starts using the agent device 5, communication is performed with a content that is easy for the driver D (user) to understand, and smooth communication using the agent device 5 can therefore be established.

### «Second Embodiment»

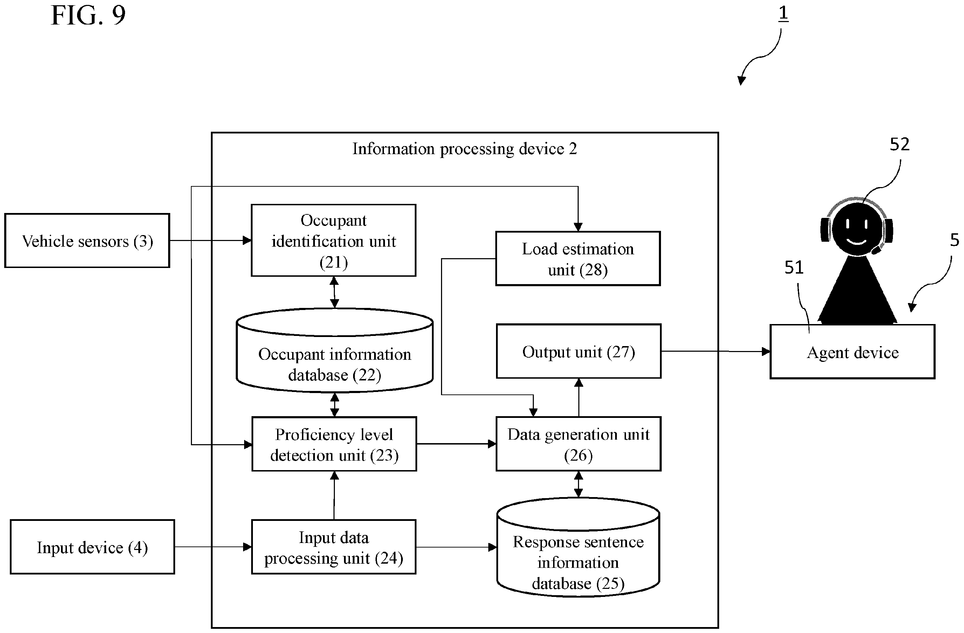

A second embodiment of the present invention will then be described with reference to FIGS. 9 to 11C. In the second embodiment, the information processing device 2 of the first embodiment is provided with a load estimation unit 28. In the present embodiment, the load estimation unit 28 is used to estimate a recognition load when the driver D recognizes the dialogue sentence data. When generating the dialogue sentence data, the data generation unit 26 changes the proportion of positive sentences used in the dialogue sentence data and the proportion of negative sentences used in the dialogue sentence data based on the recognition load of the driver D. The configuration of the information processing device 2 other than the load estimation unit 28 and the configuration of the vehicle sensors 3, the input device 4, and the agent device 5 are the same as those in the first embodiment illustrated in FIG. 1, so the description in the above-described embodiment will be borrowed for these blocks.

The load estimation unit 28 estimates the recognition load when the driver D recognizes the dialogue sentence data. The recognition load refers to an index indicating how easy it is for the user to recognize the output data from the agent device 5. For example, when the user is performing tasks other than operating the agent device 5 and cannot concentrate solely on the agent device 5, the recognition load is estimated to be high. On the other hand, when the user is not performing tasks other than operating the agent device 5 and can therefore concentrate on the agent device 5, the recognition load is estimated to be low. Additionally or alternatively, when the user is in an environment in which it is difficult to recognize the output data from the agent device 5, such as when there is noise in the surroundings, the recognition load may be estimated to be high, while when the user is in an environment in which it is easy to recognize the output data from the agent device 5, such as when the surroundings are quiet, the recognition load may be estimated to be low.

When the user is the driver D of the vehicle as in the present embodiment, the load estimation unit 28 detects the surrounding environment of the vehicle based on the detected values from the vehicle sensors 3 and estimates the recognition load of the driver D. For example, when the vehicle is traveling on a congested road, when there are many pedestrians around the vehicle, when the vehicle is traveling on a highway, or in a similar case, the driver D is in a situation in which he/she has to concentrate on the driving operation, that is, a situation in which the driver D cannot pay much attention on the agent device 5, and the recognition load is therefore estimated to be high. On the other hand, when the degree to which the driver D focuses on the driving operation is relatively light, such as when the vehicle is traveling on a road that is not congested, when there are no pedestrians around the vehicle, or when the vehicle is traveling in an autonomous travel control mode (autonomous speed control mode and/or autonomous steering control mode) using a driving assist device, the driver D is in a situation in which the driver D can pay attention on the agent device 5, and the recognition load is therefore estimated to be low. The load estimation unit 28 outputs the estimated recognition load of the driver D to the data generation unit 26.

On the basis of the recognition load of the driver D received from the load estimation unit 28, the data generation unit 26 determines the proportion of positive sentences used in the dialogue sentence data and the proportion of negative sentences used in the dialogue sentence data. Specifically, when the recognition load of the driver D is high, the proportion of positive sentences that are easy for the driver D to understand is made higher than when the recognition load of the driver D is low. This allows the communication to be performed while taking into consideration the state of use of the agent device 5 by the driver D.

Additionally or alternatively, when the recognition load of the driver D is higher than a predetermined value, the data generation unit 26 may output only positive sentences as dialogue sentence data without using negative sentences. The case in which the recognition load is higher than the predetermined value refers, for example, to a case in which the load on the driving operation is estimated to be higher than that during normal travel, such as when the driver D is traveling on a mountain road with many sharp curves or when a switching control (override) has just been performed from the autonomous travel control mode to the manual driving mode. In such a case, by outputting only the positive sentences, it is possible to suppress interference with the driving operation of the driver D. In addition, the driver D is more likely to feel a good impression on the agent 52 because only the dialogue sentence data having a positive or active sense to the driver D is output. The process of generating the dialogue sentence data using the response sentence information, the process of generating the output data from the dialogue sentence data, and the process of outputting the output data using the agent function are the same as those in the first embodiment, so the above-described description will be borrowed herein.

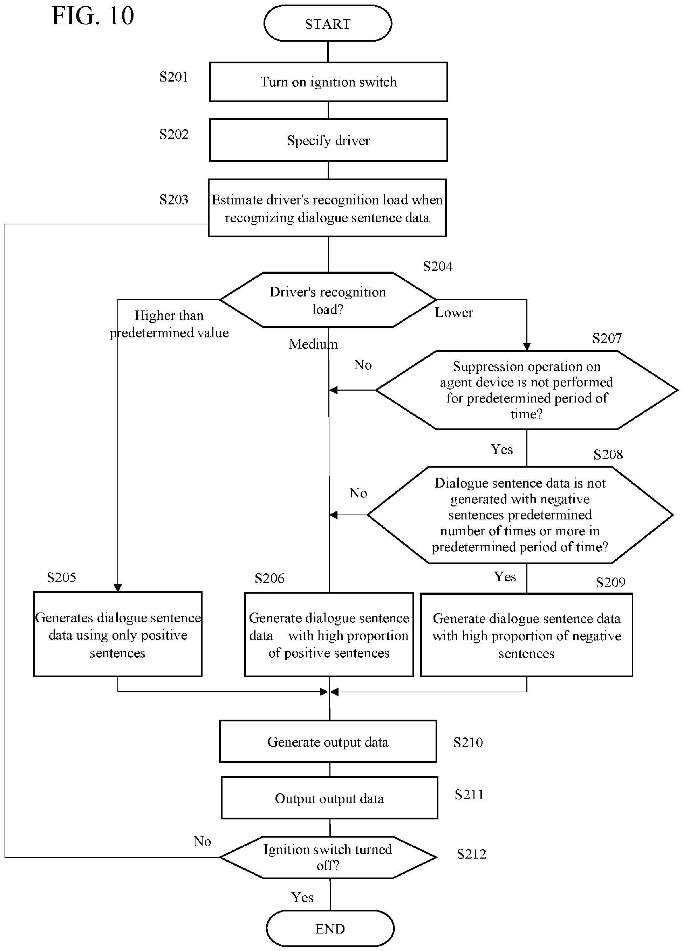

The information processing procedure of the information processing system 1 of the present embodiment will now be described with reference to FIGS. 10 to 11C. FIG. 10 is a flowchart illustrating an information processing procedure based on the recognition load of the driver D, which is executed by the information processing device 2 of FIG. 9. The information processing based on the above-described proficiency level of the driver D illustrated in FIG. 6 and the information processing based on the recognition load of the driver D illustrated in FIG. 10 may be performed in combination as appropriate.

First, in step S201 of FIG. 10, when the ignition switch of the vehicle is turned on, the following information processing is executed. In step S202, the occupant identification unit 21 specifies the driver D based on the information acquired from the onboard camera included in the vehicle sensors 3. Then, in step S203, the load estimation unit 28 detects the surrounding environment of the vehicle based on the detected values from the vehicle sensors 3 and estimates the recognition load of the driver D.

In the subsequent step S204, when a determination is made that the recognition load of the driver D estimated by the load estimation unit 28 is higher than a predetermined value, the process proceeds to step S205. When the recognition load of the driver D is medium, the process proceeds to step S206, while when the recognition load of the driver D is low, the process proceeds to step S207.

When a determination is made in step S204 that the recognition load of the driver D is higher than the predetermined value, that is, when a determination is made that the load of driving operation of the driver D is higher than that during normal travel, this step is followed by step S205, in which the data generation unit 26 generates the dialogue sentence data using only positive sentences without using negative sentences.

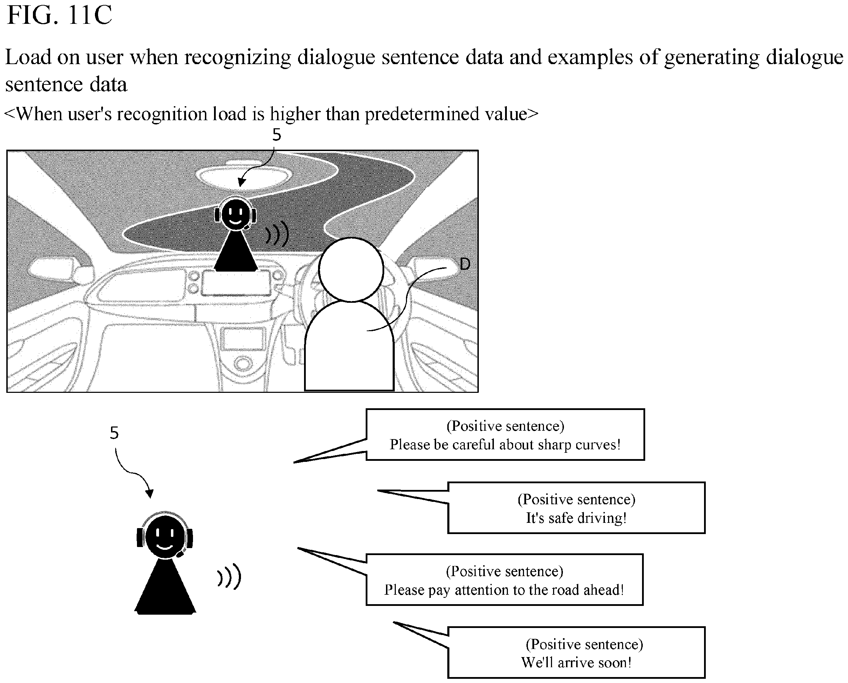

FIG. 11C is a diagram illustrating an example of a scene when step S205 is reached. This figure illustrates a scene in which the dialogue sentence data is generated to be output from the agent device 5 to the driver D using the voice function. As illustrated in FIG. 11C, when the recognition load of the driver D is higher than the predetermined value, the dialogue sentence data is generated using only the response sentence information of positive sentences such as "Please be careful about sharp curves.," "It's safe driving.," "Please pay attention to the road ahead.," and "We'll arrive soon."

When a determination is made in step S204 that the recognition load of the driver D is medium, the driver D is in a situation in which he/she cannot pay much attention on the agent device 5, so in step S206, the data generation unit 26 generates the dialogue sentence data so that the proportion of positive sentences that are easy for driver D to understand is high.

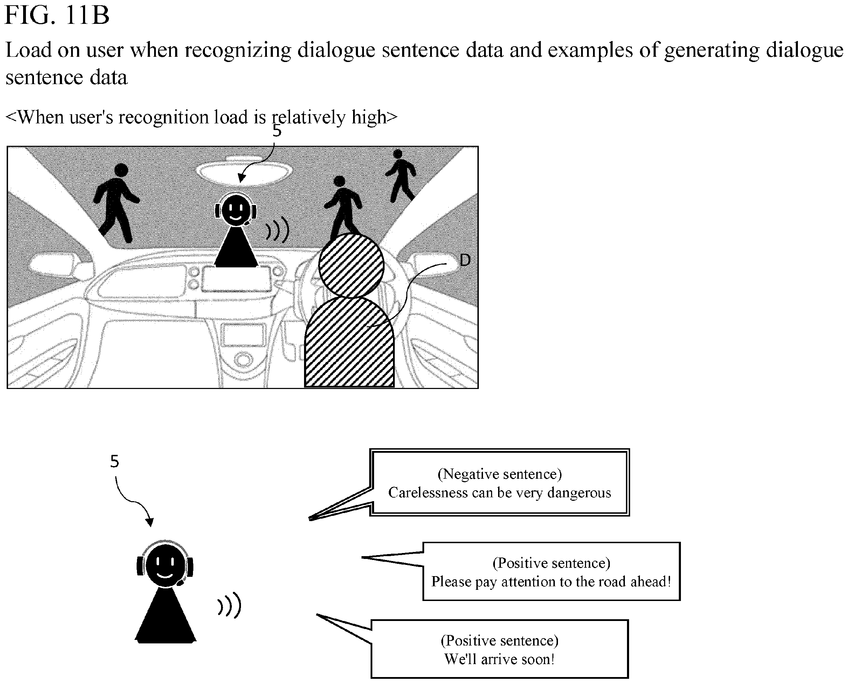

FIG. 11B is a diagram illustrating an example of a scene when step S206 is reached. As illustrated in FIG. 11B, when the recognition load of the driver D is relatively high, the dialogue sentence data is generated so that the proportion of positive sentences, such as "Please pay attention to the road ahead." and "We'll arrive soon.," is higher than when the recognition load of the driver D is relatively low, while including the response sentence information of negative sentences such as "Carelessness can be very dangerous." In FIG. 11B, the dialogue sentence data is generated from three items of response sentence information, and the negative sentence is output first, but the quantity of response sentence information used for the dialogue sentence data and the output order of negative sentences are not limited to the above. Additionally or alternatively, the data generation unit 26 may generate the dialogue sentence data by appropriately referring to a count record of the response sentence information stored for the driver D.

When a determination is made in step S204 that the recognition load of the driver D is low, the data generation unit 26 determines, in step S207, whether the suppression operation by the driver D is not performed on the output of the agent device 5 for a predetermined period of time. When the suppression operation is performed on the output of the agent device 5 within the predetermined period of time, there is a possibility that the acceptability of the driver D to the agent device 5 decreases, so the process proceeds to step S206, in which the dialogue sentence data is generated with a high proportion of the positive sentences. On the other hand, when in step S207 the suppression operation is not performed on the output of the agent device 5 for the predetermined period of time, the process proceeds to step S208.

In step S208, the data generation unit 26 determines whether the dialogue sentence data is not generated with negative sentences a predetermined number of times or more in a predetermined period of time. When the dialogue sentence data is generated using negative sentences more than the predetermined number of times in the predetermined period of time, there is a possibility that the negative sentences will be output to the driver D frequently and continuously, and the process therefore proceeds to step S206, in which the dialogue sentence data is generated with a high proportion of the positive sentences.

On the other hand, when in step S208 the dialogue sentence data is not generated using negative sentences the predetermined number of times or more in the predetermined period of time, the process proceeds to step S209, in which the data generation unit 26 generates the dialogue sentence data with a higher proportion of negative sentences than that in the case in which the proficiency level is relatively high. Note that the processing procedures in steps S207 and S208 are controls to prevent the proportion of negative sentences from becoming too high, are not essential components of the present invention, and may be omitted as appropriate.

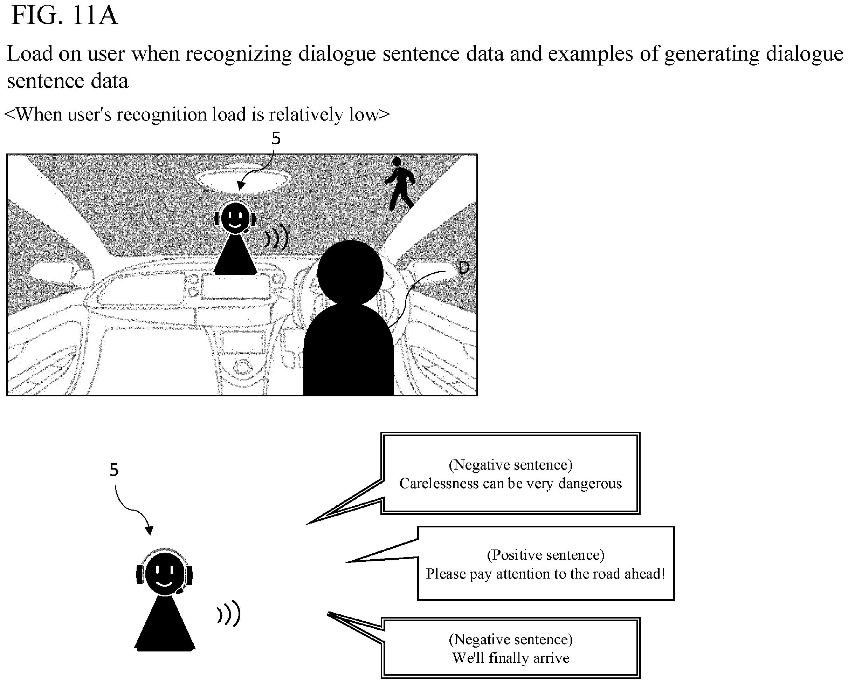

FIG. 11A is a diagram illustrating an example of a scene when step S209 is reached. As illustrated in FIG. 11A, when the recognition load of the driver D is relatively low, the driver D is supposed to be in a state in which he/she can concentrate on the agent device 5, and the dialogue sentence data is therefore generated so that the proportion of negative sentences is higher than when the recognition load is relatively high, while using both the response sentence information of positive sentences such as "Please pay attention to the road ahead." and the response sentence information of negative sentences such as "Carelessness can be very dangerous." and "We'll finally arrive." In FIG. 11A, the dialogue sentence data is generated from three items of response sentence information, and the negative sentences are output first and third, but the quantity of response sentence information used for the dialogue sentence data and the output order of negative sentences are not limited to the above. Additionally or alternatively, the data generation unit 26 may generate the dialogue sentence data by appropriately referring to a count record of the response sentence information stored for the driver D.

In the subsequent step S210, the output data to be output from the agent device 5 is generated using the generated dialogue sentence data. As illustrated in FIGS. 11A to 11C, when outputting the dialogue sentence data using the voice function of the agent device 5, the text data of the dialogue sentences is converted into voice data by a voice synthesis process to generate the output data. Although not illustrated, when outputting the dialogue sentence data using the display function of the agent device 5, the text data of the generated dialogue sentences may be used as the output data.

In step S211, the output unit 27 outputs control signals to the speaker or other voice output unit and the display or other display unit of the agent device 5, and outputs the output data using the agent function of the agent 52.

In step S212, when the ignition switch is turned off, the above information processing is concluded. On the other hand, the information processing from step S204 to step S211 is repeatedly executed until the ignition switch is turned off.

As described above, according to the information processing system 1 and the information processing method of the present embodiment, the load estimation unit that estimates the load when the driver D (user) recognizes the dialogue sentence data is further provided, and when the load of the driver D (user) is relatively high, the data generation unit 26 increases the proportion of the positive sentences used in the dialogue sentence data as compared to when the load of the driver D (user) is relatively low. This allows communication to be performed taking into consideration the state of use of the agent device 5 by the driver D (user).

Moreover, according to the information processing system 1 and the information processing method of the present embodiment, when the load of the driver D (user) is higher than a predetermined value, the data generation unit 26 does not use the negative sentences in the dialogue sentence data, and it is therefore possible to suppress interference with the task which the driver D (user) is performing. Moreover, the driver D (user) is more likely to feel a good impression on the agent 52 because only the dialogue sentence data having a positive or active sense to the driver D (user) is output.

### «Third Embodiment»

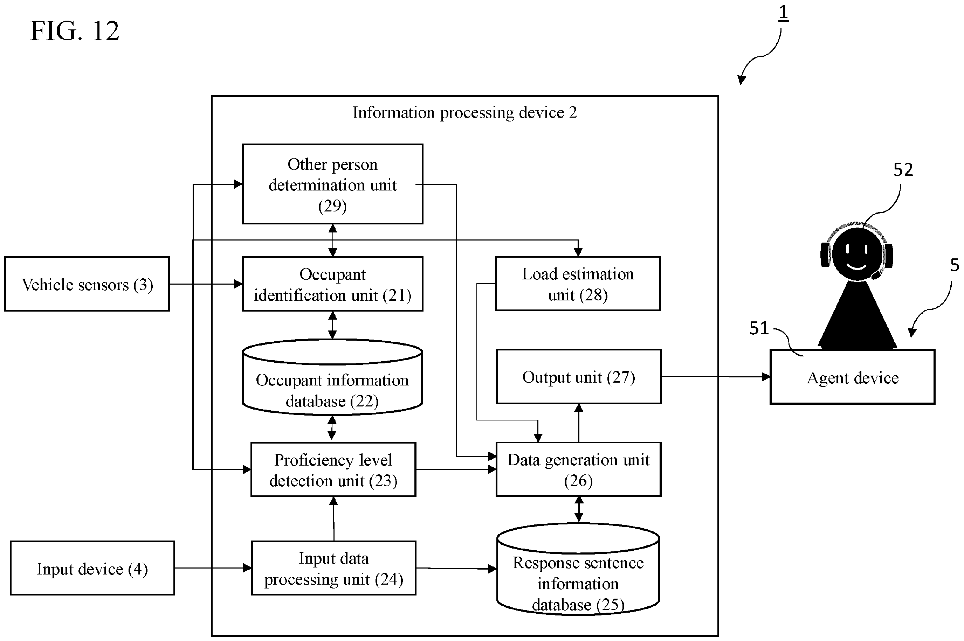

A third embodiment of the present invention will then be described with reference to FIGS. 12 to 15C. In the third embodiment, the information processing device 2 of the first embodiment is provided with an other person determination unit 29. In the present embodiment, the other person determination unit 29 is used to determine whether or not another person other than the user is present within a predetermined range. Upon the presence of the other person within the predetermined range, when generating the dialogue sentence data, the data generation unit 26 changes the proportion of positive sentences used in the dialogue sentence data and the proportion of negative sentences used in the dialogue sentence data. The predetermined range is not particularly limited, but is a range in which communication can be made with the agent device 5, and when the agent device 5 is provided in the vehicle as in the present embodiment, it is the interior of the vehicle. The configuration of the information processing device 2 other than the other person determination unit 29 and the configuration of the vehicle sensors 3, the input device 4, and the agent device 5 are the same as those in the first embodiment illustrated in FIG. 1, so the description in the above-described embodiment will be borrowed for these blocks. In the present invention, the load estimation unit 28 is not an essential component and may therefore be omitted as appropriate.

The other person determination unit 29 determines, based on input signals from the vehicle sensors 3, whether or not a fellow passenger X other than the driver D is present within the vehicle interior. When a determination is made that the fellow passenger X is present, the identification information of the fellow passenger X is at least temporarily stored. In the scene illustrated in FIG. 2, the other person determination unit 29 specifies the person sitting in a seat other than the driver's seat as the fellow passenger X based on image data captured by the onboard camera included in the vehicle sensors 3, and stores the identification information of the fellow passenger X. The determination as to whether or not the fellow passenger X is present may be performed using an input signal from a seating sensor provided inside the seating portion of a seat or a seat belt sensor. In addition, the other person determination unit 29 generates boarding information by associating the detected values obtained from the vehicle sensors 3 with the identification information of the fellow passenger X and accumulates the generated boarding information in the occupant information database. The boarding information refers to information such as a boarding history that records the time when the fellow passenger X gets on the vehicle and the time when he/she gets off the vehicle.

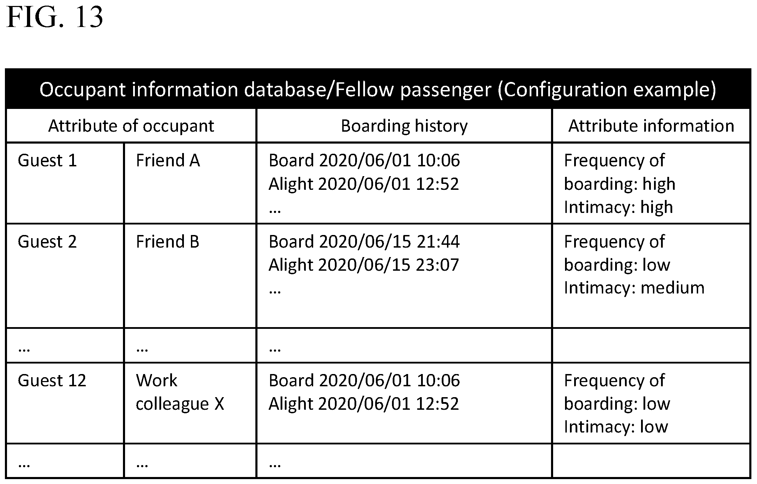

FIG. 13 is a diagram illustrating a configuration example (fellow passenger) of the occupant information database 22. As illustrated in FIG. 13, in the occupant attributes, for example, a friend A is recorded as a guest 1, and the boarding history in which the friend A as the guest 1 gets on and off the vehicle is stored. Additionally or alternatively, the occupant information database 22 may include attribute information such as the frequency of boarding of a guest and the degree of intimacy between the driver D and each guest estimated from the voice information acquired via the input device 4. In the case of a fellow passenger X who boards the vehicle for the first time, the occupant information is not stored in the occupant information database 22, so the other person determination unit 29 newly generates data. The identification information of the fellow passenger X specified by the other person determination unit 29 and the boarding history and attribute information of the fellow passenger X generated by the other person determination unit 29 are accumulated in the occupant information database 22 and output to the data generation unit 26.

On the basis of the identification information of the fellow passenger X and the attribute information of the fellow passenger X received from the other person determination unit 29, the data generation unit 26 determines the proportion of positive sentences used in the dialogue sentence data and the proportion of negative sentences used in the dialogue sentence data. As described above, negative sentences are those used in a negative or inactive sense to the driver D, so if many negative sentences are output when the fellow passenger X is present, the driver D may feel uncomfortable. When the fellow passenger X is present, therefore, the data generation unit 26 increases the proportion of positive sentences used in the dialogue sentence data as compared to when the fellow passenger X is not present. This allows appropriate communication to be performed even when there is a fellow passenger X other than the driver D.

Additionally or alternatively, when there is a fellow passenger X who is not stored in the occupant information database 22, that is, who boards the vehicle for the first time, the data generation unit 26 may output only positive sentences as the response sentence data without using negative sentences. Even when the fellow passenger X is stored in the occupant information database 22, if the attribute information is lower than a predetermined value, only positive sentences may be output as the response sentence data without using negative sentences. Although the predetermined value is not particularly limited, it may represent a case in which the fellow passenger X boards the vehicle less frequently, a case in which the degree of intimacy between the driver D and the fellow passenger X is low, or other similar case. When there is a fellow passenger X who boards the vehicle for the first time, a fellow passenger X who boards the vehicle less frequently, or a fellow passenger X whose degree of intimacy with the driver D is low or in other similar cases, the driver D may have to concentrate more on the communication with the fellow passenger X than on the agent device 5. Therefore, by outputting only easy-to-understand positive sentences from the agent device 5, smooth communication can be performed among the driver D, the fellow passenger X, and the agent device 5. Moreover, the driver D is more likely to feel a good impression on the agent because sentences that are used in a negative or inactive sense to the driver D are not output.

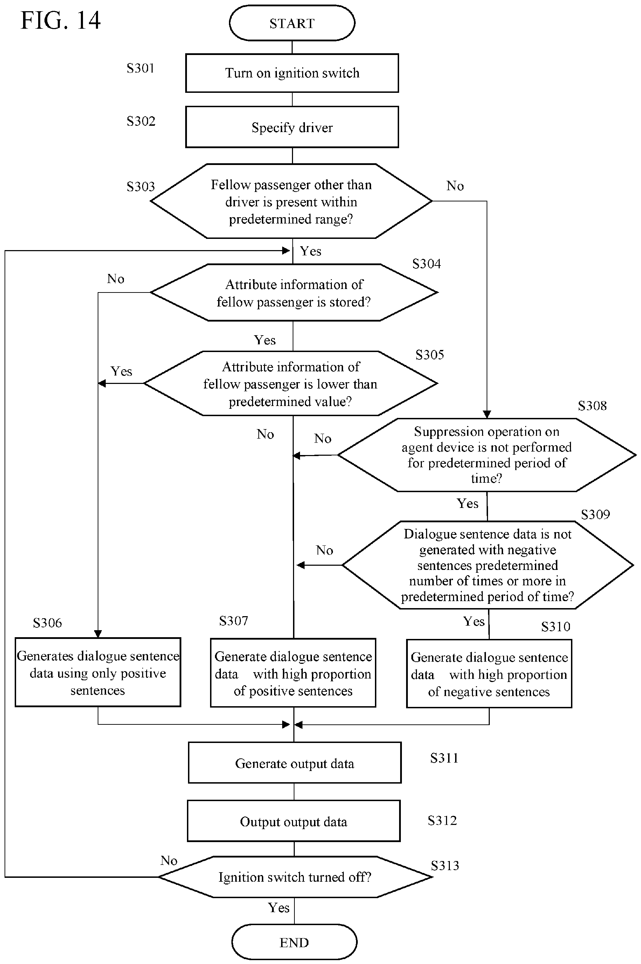

The information processing procedure of the information processing system 1 of the present embodiment will now be described with reference to FIGS. 14 to 15C. FIG. 14 is a flowchart illustrating an information processing procedure based on the determination as to whether or not the fellow passenger X is present, which is executed by the information processing device 2 of FIG. 12. The information processing based on the above-described proficiency level of the driver D illustrated in FIG. 6, the information processing based on the recognition load of the driver D illustrated in FIG. 10, and the information processing based on the determination as to whether or not the fellow passenger X is present may be performed by combining any two of them as appropriate or may also be performed by combining all the three types of information processing.

First, in step S301 of FIG. 14, when the ignition switch of the vehicle is turned on, the following information processing is executed. In step S302, the occupant identification unit 21 specifies the driver D based on the information acquired from the onboard camera included in the vehicle sensors 3. Then, in step S303, the other person determination unit 29 determines, based on the image data captured by the onboard camera, whether or not a fellow passenger X other than the driver D is present within the vehicle. When a determination is made that the passenger X is present within the vehicle, the process proceeds to step S304. On the other hand, when a determination is made that a passenger X is not present, the process proceeds to step S308.

When a determination is made in step S303 that the fellow passenger X is present within the vehicle, a determination is made in step S304 whether or not the attribute information of the fellow passenger X is stored in the occupant information database 22. When the attribute information of the fellow passenger X is not stored in the occupant information database 22, the process proceeds to step S306. On the other hand, when the attribute information of the fellow passenger X is stored in the occupant information database 22, the process proceeds to step S305.

In step S305, the other person determination unit 29 determines whether or not the attribute information of the fellow passenger X is lower than a predetermined value. The attribute information of the fellow passenger X refers to the frequency of boarding of the fellow passenger X, the degree of intimacy between the driver D and the fellow passenger X, and the like. When the attribute information of the fellow passenger X is lower than the predetermined value, the process proceeds to step S306. On the other hand, when the attribute information of the fellow passenger X is not lower than the predetermined value, the process proceeds to step S307.

When step S304 results in a determination that the attribute information of the fellow passenger X is not stored in the occupant information database 22, that is, when the fellow passenger X is a person who boards the vehicle for the first time, and when step S305 results in a determination that the attribute information of the fellow passenger X is lower than a predetermined value, that is, when the frequency of boarding of the fellow passenger X is low or when the degree of intimacy between the driver D and the fellow passenger X is low, these steps are followed by step S306, in which the data generation unit 26 generates the dialogue sentence data using only positive sentences without using negative sentences.

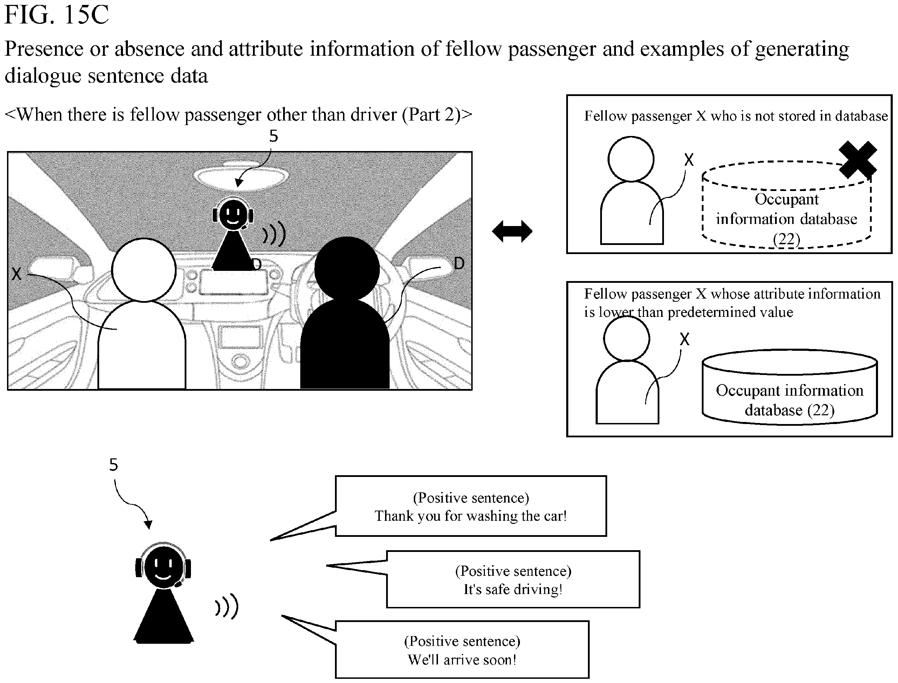

FIG. 15C is a diagram illustrating an example of a scene when step S306 is reached. This figure illustrates a scene in which the dialogue sentence data is generated to be output from the agent device 5 to the driver D using the voice function. As illustrated in FIG. 15C, when there is a fellow passenger X who is not stored in the occupant information database 22, or when there is a fellow passenger X whose attribute information is lower than a predetermined value even though the occupant information is stored in the occupant information database 22, the dialogue sentence data is generated using only the response sentence information of positive sentences such as "Thank you for washing the car.," "It's safe driving.," and "We'll arrive soon."

When a determination is made in step S305 that the attribute information of the fellow passenger X is not lower than the predetermined value, negative sentences may be used, but in order to avoid outputting many negative sentences used in a negative or inactive sentence to the driver D, in step S307, the data generation unit 26 generates the dialogue sentence data so that the proportion of positive sentences is high.

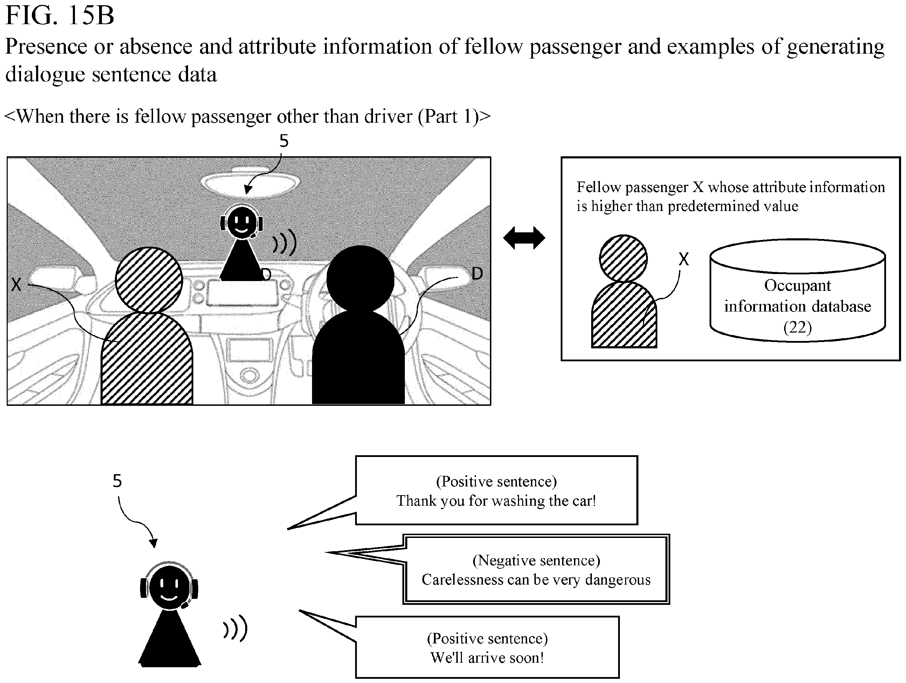

FIG. 15B is a diagram illustrating an example of a scene when step S307 is reached. As illustrated in FIG. 15B, when there is a fellow passenger X whose attribute information is higher than a predetermined value, the dialogue sentence data is generated so that the proportion of positive sentences, such as "Thank you for washing the car." and "We'll arrive soon.," is higher than when there is no fellow passenger X, while suppressing negative sentences such as "Carelessness can be very dangerous." In FIG. 15B, the dialogue sentence data is generated from three items of response sentence information, and the negative sentence is output second, but the quantity of response sentence information used for the dialogue sentence data and the output order of negative sentences are not limited to the above. Additionally or alternatively, the data generation unit 26 may generate the dialogue sentence data by appropriately referring to a count record of the response sentence information stored for the driver D.

When a determination is made in step S303 that there is no fellow passenger X other than the driver D, the data generation unit 26 determines, in step S308, whether the suppression operation by the driver D is not performed on the output of the agent device 5 for a predetermined period of time. When the suppression operation is performed on the output of the agent device 5 within the predetermined period of time, there is a possibility that the acceptability of the driver D to the agent device 5 decreases, so the process proceeds to step S307, in which the dialogue sentence data is generated with a high proportion of the positive sentences. On the other hand, when in step S308 the suppression operation is not performed on the output of the agent device 5 for the predetermined period of time, the process proceeds to step S309.

In step S309, the data generation unit 26 determines whether the dialogue sentence data is not generated with negative sentences a predetermined number of times or more in a predetermined period of time. When the dialogue sentence data is generated using negative sentences more than the predetermined number of times in the predetermined period of time, there is a possibility that the negative sentences will be output to the driver D frequently and continuously, and the process therefore proceeds to step S307, in which the dialogue sentence data is generated with a high proportion of the positive sentences.

On the other hand, when in step S309 the dialogue sentence data is not generated using negative sentences the predetermined number of times or more in the predetermined period of time, the process proceeds to step S310, in which the dialogue sentence data is generated with a higher proportion of negative sentences than that in the case in which the fellow passenger X is present. Note that the processing procedures in steps S308 and S309 are controls to prevent the proportion of negative sentences from becoming too high, are not essential components of the present invention, and may be omitted as appropriate.

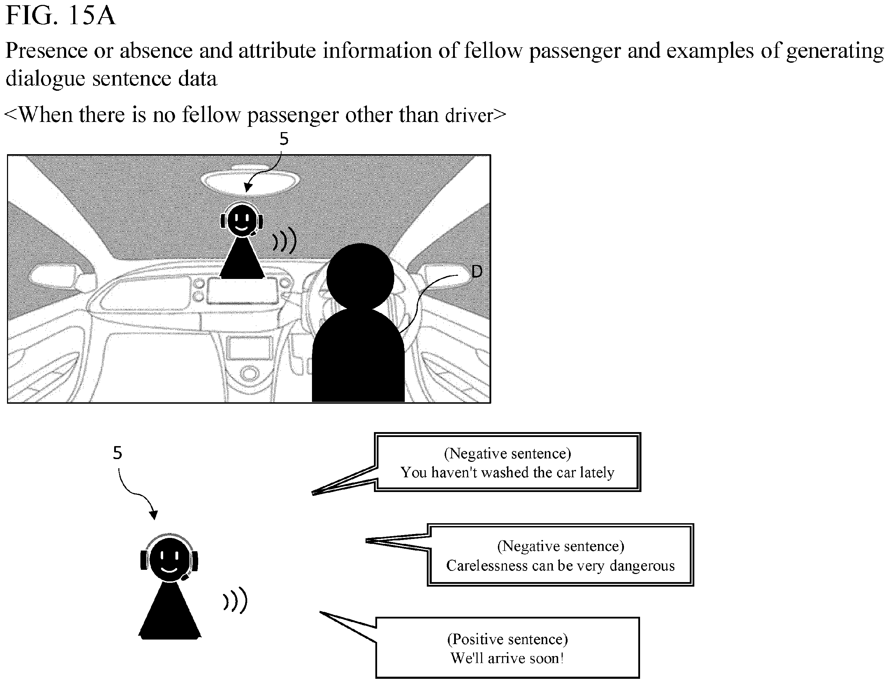

FIG. 15A is a diagram illustrating an example of a scene when step S310 is reached. As illustrated in FIG. 15A, when there is no fellow passenger X other than the driver D, the dialogue sentence data is generated so that the proportion of negative sentences is higher than when the fellow passenger X is present, while using both the response sentence information of positive sentences such as "We'll arrive soon." and the response sentence information of negative sentences such as "You haven't washed the car lately" and "Carelessness can be very dangerous." In FIG. 15A, the dialogue sentence data is generated from three items of response sentence information, and the negative sentences are output first and second, but the quantity of response sentence information used for the dialogue sentence data and the output order of negative sentences are not limited to the above. Additionally or alternatively, the data generation unit 26 may generate the dialogue sentence data by appropriately referring to a count record of the response sentence information stored for the driver D.

In the subsequent step S311, the output data to be output from the agent device 5 is generated using the generated dialogue sentence data. As illustrated in FIGS. 15A to 15C, when outputting the dialogue sentence data using the voice function of the agent device 5, the text data of the dialogue sentences is converted into voice data by a voice synthesis process to generate the output data. Although not illustrated, when outputting the dialogue sentence data using the display function of the agent device 5, the text data of the generated dialogue sentences may be used as the output data.

In step S312, the output unit 27 outputs control signals to the speaker or other voice output unit and the display or other display unit of the agent device 5, and outputs the output data using the agent function of the agent 52.

In step S313, when the ignition switch is turned off, the above information processing is concluded. On the other hand, the information processing from step S304 to step S312 is repeatedly executed until the ignition switch is turned off.

As described above, according to the information processing system 1 and the information processing method of the present embodiment, the other person determination unit 29 is further provided, which determines whether or not a fellow passenger X (another person) other than the driver D (user) is present within a predetermined range, and when the other person determination unit 29 determines that the fellow passenger X (other person) is present within the predetermined range, the data generation unit 26 increases the proportion of the positive sentences used in the dialogue sentence data as compared to when the other person determination unit 29 determines that the fellow passenger X (other person) is not present within the predetermined range. This allows appropriate communication to be performed even when there is a fellow passenger X (another person) other than the driver D (user).

Moreover, according to the information processing system 1 and the information processing method of the present embodiment, the other person determination unit 29 specifies and stores attribute information of the fellow passenger X (other person), and when the fellow passenger X (other person) is present within the predetermined range and the attribute information of the fellow passenger X (other person) is not stored or when the stored attribute information of the fellow passenger X (other person) is lower than a predetermined value, the data generation unit 26 does not use the negative sentences in the dialogue sentence data. This allows smooth communication to be performed among the driver D (user), the fellow passenger X (other person), and the agent device 5. Moreover, the driver D (user) is more likely to feel a good impression on the agent 52 because sentences that are used in a negative or inactive sense to the driver D (user) are not output.

Embodiments heretofore explained are described to facilitate understanding of the present invention and are not described to limit the present invention. It is therefore intended that the elements disclosed in the above embodiments include all design changes and equivalents to fall within the technical scope of the present invention.

### [Description of Reference Numerals]

- 1: Information processing system
- 2: Information processing device

- 21: Occupant identification unit
- 22: Occupant information database
- 23: Proficiency level detection unit
- 24: Input data processing unit
- 25: Response sentence information database
- 26: Data generation unit
- 27: Output unit
- 28: Load estimation unit
- 29: Other person determination unit

- 3: Vehicle sensors
- 4: Input device
- 5: Agent device

## Claims

1. An information processing system comprising:
an agent device having an agent function; and
an information processing device that generates dialogue sentence data according to a user's proficiency level with respect to the agent device,
the information processing system outputting the generated dialogue sentence data to the user using the agent function,
the information processing device comprising:
a detection unit that detects the user's proficiency level with respect to the agent device; and
a data generation unit that generates the dialogue sentence data using response sentence information classified into positive sentences and negative sentences,
the data generation unit changing a proportion of the positive sentences used in the dialogue sentence data and a proportion of the negative sentences used in the dialogue sentence data, depending on whether the user's proficiency level is relatively low or relatively high.

2. The information processing system according to claim 1, wherein the user's proficiency level is estimated from at least one of an amount of time the user uses the agent device, a frequency of use and operating state of the agent device, and a frequency and content of input data from the user.

3. The information processing system according to claim 1 or 2, wherein when the user's proficiency level is relatively low, the data generation unit increases the proportion of the positive sentences used in the dialogue sentence data as compared to when the user's proficiency level is relatively high.

4. The information processing system according to any one of claims 1 to 3, wherein when the user's proficiency level is lower than a predetermined value, the data generation unit does not use the negative sentences in the dialogue sentence data.

5. The information processing system according to any one of claims 1 to 4, further comprising
a load estimation unit that estimates a load when the user recognizes the dialogue sentence data,
wherein when the load of the user is relatively high, the data generation unit increases the proportion of the positive sentences used in the dialogue sentence data as compared to when the load of the user is relatively low.

6. The information processing system according to claim 5, wherein when the load of the user is higher than a predetermined value, the data generation unit does not use the negative sentences in the dialogue sentence data.

7. The information processing system according to any one of claims 1 to 6, further comprising
an other person determination unit that determines whether or not another person other than the user is present within a predetermined range,
wherein when the other person determination unit determines that the other person is present within the predetermined range, the data generation unit increases the proportion of the positive sentences used in the dialogue sentence data as compared to when the other person determination unit determines that the other person is not present within the predetermined range.

8. The information processing system according to claim 7, wherein
the other person determination unit specifies and stores attribute information of the other person, and
when the other person is present within the predetermined range and the attribute information of the other person is not stored or when the stored attribute information of the other person is lower than a predetermined value, the data generation unit does not use the negative sentences in the dialogue sentence data.

9. An information processing method comprising:
generating dialogue sentence data according to a user's proficiency level with respect to an agent device; and
causing a processor to execute a process of outputting the generated dialogue sentence data to the user using the agent device,
the processor operating to:
detect the user's proficiency level with respect to the agent device;
generate the dialogue sentence data using response sentence information classified into positive sentences and negative sentences;
output the generated dialogue sentence data to the user; and
change a proportion of the positive sentences used in the dialogue sentence data and a proportion of the negative sentences used in the dialogue sentence data, depending on whether the user's proficiency level is relatively low or relatively high.
